(19) Europäisches Patentamt
European Patent Office
Office européen des brevets

(11) Veröffentlichungsnummer : **0 015 465**
**B1**

(12) # EUROPÄISCHE PATENTSCHRIFT

(45) Veröffentlichungstag der Patentschrift : **11.11.81**

(51) Int. Cl.$^3$ : **C 09 D 3/72**, C 14 C 11/00, C 08 G 18/40

(21) Anmeldenummer : **80100906.9**

(22) Anmeldetag : **25.02.80**

(54) **Feuchtigkeitshärtende Einkomponenten-Lacke und Verfahren zur Beschichtung von Leder.**

(30) Priorität : **06.03.79 DE 2908628**

(43) Veröffentlichungstag der Anmeldung : **17.09.80 (Patentblatt 80/19)**

(45) Bekanntmachung des Hinweises auf die Patenterteilung : **11.11.81 Patentblatt 81/45**

(84) Benannte Vertragsstaaten : **BE DE FR GB IT NL**

(56) Entgegenhaltungen :
**FR - A - 2 145 379**
**US - A - 3 457 225**
**US - A - 3 705 132**

(73) Patentinhaber : **BAYER AG**
**Zentralbereich Patente, Marken und Lizenzen**
**D-5090 Leverkusen 1, Bayerwerk (DE)**

(72) Erfinder : **Noll, Klaus, Dr.**
**Morgengraben 6**
**D-5000 Köln 80 (DE)**
Erfinder : **Speicher, Wolfgang, Dr.**
**Walter-Flex-Strasse 5**
**D-5090 Leverkusen (DE)**
Erfinder : **Pedain, Josef, Dr.**
**Haferkamp 6**
**D-5000 Köln 80 (DE)**
Erfinder : **Schmid, Rosemarie**
**Schopenhauerstrasse 8**
**D-5090 Leverkusen (DE)**

**EP 0 015 465 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 17, rue du Louvre, 75001 Paris, France

Feuchtigkeitshärtende Einkomponenten-Lacke und Verfahren zur Beschichtung von Leder

Die vorliegende Erfindung betrifft Lacke zur narbendeckenden und hochglänzenden Beschichtung von Leder.

Außer Zurichtungen, die Leder schützen und seine Eigenschaften vorteilhaft verändern, ohne jedoch den Ledercharakter zu beeinflussen, werden in der Lederindustrie auch Lacke eingesetzt, die die Narbenoberfläche des Leders sichtbar verändern oder gar verdecken sollen. Solche Lackschichten wurden einst ausschließlich auf schwarzes Leder aufgebracht und sollten die Tiefe der Schwärze hervorheben und dem Leder eine spiegelndglänzende Oberfläche verleihen. Heute dient diese Behandlung der Verfremdung von Leder in jeder nur denkbaren dekorativen Weise.

Infolgedessen werden an die Beschichtungsmaterialien immer höhere Ansprüche gestellt und Polyurethane (« PUR ») nehmen, wie auf vielen anderen Gebieten der Oberflächenveredelung, auch bei den Lederlacken wegen ihrer ausgezeichneten Qualität eine Spitzenstellung ein.

Seit geraumer Zeit werden Lederlackierungen auf Basis von PUR-Lacken weltweit mit Zweikomponenten-Systemen durchgeführt. Bei diesen Systemen wird bekanntlich eine Mischung aus Polyisocyanaten und Polyhydroxylverbindungen appliziert und das fertige Polyurethan erst nach dem Auftrag direkt auf der Lederoberfläche erzeugt. Nur nach diesem Verfahren lassen sich bisher mit Hydroxylpolyestern hochglänzende Filme erzeugen. Das Verfahren besitzt allerdings auch empfindliche Nachteile :

1. Die Topfzeit der Mischung aus Isocyanat und Hydroxylverbindung ist begrenzt und die Fließeigenschaften verändern sich während des Stehens allmählich.

2. Die Feuchtigkeit der umgebenden Atmosphäre hat während der Trockenzeit der Lackschichten oft einen unübersehbaren Einfluß auf die Eigenschaften des fertigen Lackleders.

3. Die fertigen Polyurethanschichten besitzen häufig eine unzureichende Wärmestandfestigkeit, was ihre Verarbeitung auf hitzeverformenden Maschinen einschränkt.

Es hat deshalb nicht an Versuchen gefehlt, diese Nachteile zu vermeiden. Ein denkbarer Weg ist die Verwendung von luft- bzw. feuchtigkeitstrocknenden Einkomponentenlacken, die zwar im verschlossenen Gefäß fast beliebig lange lagerungsfähig sind, jedoch nach dem Aufbringen auf Leder in kurzer Zeit trocknen. Solche Lacke enthalten noch freie Isocyanatgruppen und gehören allgemein zur Klasse der sogenannten Prepolymeren.

Es lag daher nahe, mit solchen reaktiven Einkomponentenlacken die Nachteile der Zweikomponenten-Systeme zu umgehen, insbesondere den der mangelnden Lagerfähigkeit. Diese Versuche haben jedoch bisher nicht zum Erfolg geführt. Im einzelnen haben die bekannten Einkomponentenlacke folgende gravierende Nachteile :

1. Polyesterprepolymere verleihen, im Gegensatz zu den ebenfalls Hydroxylpolyester enthaltenden Zweikomponenten-Systemen, der fertigen Lackierung unzureichenden Glanz und mangelnde Fülle und sind aus diesem Grund den entsprechenden Zweikomponentenlacken unterlegen.

2. Prepolymere, die Hydroxylpolyäther enthalten, zeigen zwar ausgezeichneten Glanz, aber auch eine Eigenschaft, die sie besonders für dunkel gefärbte Leder ungeeignet macht : Aus den Ledern wandern natürliche und synthetische Fette durch den Lack an dessen Oberfläche und lagern sich dort als wolkige Beläge ab, die den Glanz vermindern und dem Leder neben einer Farbaufhellung einen unangenehmen Griff verleihen. Mit üblichen Methoden, wie z.B. dem Zusatz von Siliconverbindungen, ist diesem Nachteil nicht beizukommen.

Mit den nachstehend beschriebenen erfindungsgemäßen Einkomponenten-Lederlacken konnten nunmehr alle diese Nachteile beseitigt und Systeme bereitgestellt werden, die im Eigenschaftsniveau den klassischen Zweikomponentenlacken nicht nachstehen und überdies hinsichtlich Lagerfähigkeit und Verarbeitung zusätzliche Vorteile aufweisen. Es wurde nämlich überraschend gefunden, daß eine Mischung aus Hydroxylpolyestern und speziellen Hydroxylpolyäthern als Polyolkomponente zu Prepolymeren führt, die eine Beschichtung mit hohem Glanz, guter Knickbeständigkeit, hoher Fülle und einer Sperrwirkung gegen Lederzusatzstoffe ergeben.

Gegenstand der vorliegenden Erfindung sind feuchtigkeitshärtende Einkomponentenlacke auf Basis von freien Isocyanatgruppen aufweisenden Umsetzungsprodukten aus höhermolekularen Polyolen mit einer mittleren Funktionalität von 2 bis 3, Polyisocyanaten und gegebenenfalls niedermolekularen Polyhydroxylverbindungen, welche dadurch gekennzeichnet sind, daß das höhermolekulare Polyol eine Mischung aus a) einem Hydroxylpolyester mit einem mittleren Molekulargewicht von 500 bis 6 000, b) einem Hydroxylpolyäther der allgemeinen Formel

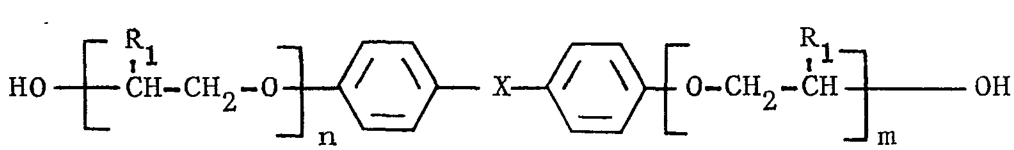

in der

$R_1$ für Wasserstoff, einen $C_1$-$C_4$-Alkylrest oder einen Phenylrest,

X für einen der zweiwertigen Reste -S-, -O-, $-SO_2-$, -CO- oder $-C(R_2R_3)-$, wobei

$R_2$ und $R_3$ gleich oder verschieden sind und Wasserstoff oder einen $C_1$-$C_4$-Alkylrest darstellen, und n und m für eine ganze Zahl >0 stehen, wobei (n+m) so gewählt wird, daß das mittlere Molgewicht des Hydroxylpolyäthers 300 bis 1 200, vorzugsweise 350 bis 800, beträgt.

sowie gegebenenfalls

c) einem weiteren Polyätherpolyol mit einem Molekulargewicht von 500 bis 6 000

ist, wobei der Anteil von b) an der Gesamtmenge des höhermolekularen Polyols 3 bis 30 Gew.-%, vorzugsweise 4 bis 20 Gew.-%, und jener von c) 0 bis 5 Gew.-%, vorzugsweise 0,5 bis 3 Gew.-%, ausmacht.

Die Hydroxylpolyäther b) werden in an sich bekannter Weise durch Polyaddition von Epoxiden an Startermoleküle der allgemeinen Formel :

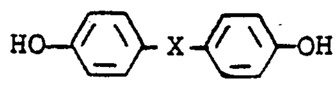

in der X die oben angegebene Bedeutung hat, hergestellt. Bevorzugt sind solche Starter, in denen X für

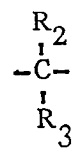

steht, wobei jene besonders bevorzugt sind, bei welchen $R_2 = R_3 = -CH_3$. Als Epoxide kommen z.B. Äthylenoxid, Propylenoxid, Butylenoxid, Styroloxid oder auch Gemische dieser Verbindungen in Frage, vorzugsweise aber Propylenoxid.

Die bei der Herstellung der erfindungsgemäßen Lacke zu verwendenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Als Beispiele für solche Carbonsäuren und deren Derivate seien genannt :

Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren, wie Ölsäure ; Terephthalsäuredimethylester und Terephthalsäure-bis-glykolester. Als mehrwertige Alkohole kommen z.B. Äthylenglykol, Propylenglykol-(1,2) und -(1,3), Butylenglykol-(1,4) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylolpropan, Hexantriol-(1,2,6) Butantriol-(1,2,4), Trimethyloläthan, Pentaerythrit, Chinit, Mannit und Sorbit, Formit, Methylglykosid, ferner Diäthylenglykol, Triäthylenglykol, Tetraäthylenglykol und höhere Polyäthylenglykole, Dipropylenglykol und höhere Polypropylenglykole sowie Dibutylenglykol und höhere Polybutylenglykole in Frage. Die Polyester können anteilig endständige Carboxylgruppen aufweisen. Auch Polyester aus Lactonen, z.B. ε-Caprolacton, oder aus Hydroxycarbonsäuren, z.B. ω-Hydroxycapronsäure, sind einsetzbar.

Die mittlere Hydroxylfunktionalität dieser Polyester sollte 3 nicht wesentlich überschreiten ; vorzugsweise liegt sie zwischen 2 und 3 ; weniger bevorzugt sind tetra- und höherfunktionelle Ester. Das Molgewicht der Polyesterpolyole a) soll zwischen 500 und 6 000, vorzugsweise zwischen 800 und 3 000, liegen.

In einer bevorzugten Ausführungsform der Erfindung werden bei der Herstellung der Lacke neben den Hydroxylpolyestern a) und den oben beschriebenen Hydroxylpolyäthern b) noch kleinere Mengen eines « konventionellen » Hydroxylpolyäthers c) mitverwendet.

Diese ebenfalls mindestens zwei, vorzugsweise zwei bis drei, Hydroxylgruppen aufweisenden Polyäther sind solche der an sich bekannten Art und werden z.B. durch Polymerisation von Epoxiden wie Äthylenoxid, Propylenoxid, Butylenoxid, Tetrahydrofuran, Styroloxid oder Epichlorhydrin mit sich selbst, z.B. in Gegenwart von Lewis-Katalysatoren wie $BF_3$, oder durch Anlagerung dieser Epoxide, vorzugsweise von Äthylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z.B. Äthylenglykol, Propylenglykol-(1,3) oder -(1,2). Trimethylolpropan, Glycerin, Sorbit, Formit, Anilin, Äthanolamin oder Äthylendiamin hergestellt.

Bevorzugte Polyäther c) sind solche, die ein tertiäres Stickstoffatom enthalten. Sie sollten bei der Herstellung des erfindungsgemäßen Einkomponentenlacks in Mengen nicht über 5 %, vorzugsweise unter 3 %, bezogen auf die Gesamtmenge an höhermolekularem Polyol, mitverwendet werden.

Als Isocyanatkomponente kommen für die Herstellung der in den erfindungsgemäßen Lacken enthaltenden NCO-Prepolymeren im Prinzip alle an sich bekannten aliphatischen, cycloaliphatischen, araliphatischen und vorzugsweise aromatischen Polyisocyanate in Betracht, wie sie z.B. von W. Siefken in Justus Liebigs Annalen der Chemie, 562, Seiten 75 bis 136, beschrieben werden, beispielsweise solche der Formel

$$Q\ (NCO)_n$$

in der

n = 2-4, vorzugsweise 2,

und

Q einen aliphatischen Kohlenwasserstoffrest mit 2-18, vorzugsweise 6-10 C-Atomen, einen cycloaliphatischen Kohlenwasserstoffrest mit 4-15, vorzugsweise 5-10 C-Atomen, einen aromatischen Kohlenwasserstoffrest mit 6-15, vorzugsweise 6-13 C-Atomen, oder einen araliphatischen Kohlenwasserstoffrest mit 8-15, vorzugsweise 8-13 C-Atomen, bedeuten, z.B. Äthylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DE-Auslegeschritt 1 202 785, US-Patentschrift 3 401 190), 2,4- und 2,6-Hexahydrotoluylendiisocyanat sowie beliebige Gemische dieser Isomeren, Hexahydro-1,3- und/oder -1,4-phenylendiisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat, Triphenylmethan-4,4',4''-triisocyanat und Polyphenyl-polymethylenpolyisocyanate, wie sie durch Anilin-Formaldehyd-Kondensation und anschließende Phosgenierung erhalten und z.B. in den GB-Patentschriften 874 430 und 848 671 beschrieben werden.

Auch modifizierte Polyisocyanate, z.B. Umsetzungsprodukte aus Diisocyanaten wie 2,4- und/oder 2,6-Diisocyanattotoluol, 1,6-Diisocyanatohexan, 1-Isocyanato-3-isocyanatomethyl-3,5,5-trimethylcyclohexan oder 4,4'-Diisocyanatodicyclohexylmethan sowie deren Gemischen mit Triolen wie Trimethylolpropan, Trimethyloläthan, Hexantriol oder Glycerin, Isocyanuratgruppen aufweisende Polyisocyanate, beispielsweise aus den oben erwähnten Diisocyanaten, sowie die an sich bekannten Biuretpolyisocyanate und Allophanatpolyisocyanate können mitverwendet oder dem fertigen Prepolymer beigemischt werden.

Gegebenenfalls kann man bei der Herstellung des NCO-Prepolymeren auch Polyole (vorzugsweise Di- und Triole) mit einem Molekulargewicht unter 300 mitverwenden.

Als Beispiele für derartige Verbindungen seien genannt:

Äthylenglykol, Propylenglykol-(1,2) und -(1,3), Butylenglykol-(1,4) und -(2,3), Pentandiol-(1,5), Hexandiol-(1,6), Octandiol-(1,8), Neopentylglykol, 1,4-Bis-hydroxymethyl-cyclohexan, 2-Methyl-1,3-propandiol, Dibrombutendiol (US-Patentschrift 3 723 392), Glyzerin, Trimethylolpropan, Hexantriol-(1,2,6), Trimethyloläthan, Pentaerythrit, Chinit, Mannit und Sorbit, Ricinusöl, Diäthylenglykol, Triäthylenglykol, Tetraäthylenglykol, höhere Polyäthylenglykole mit einem Molekulargewicht bis 300, Dipropylenglykol, höhere Polypropylenglykole mit einem Molekulargewicht bis 300, Dibutylenglykol, höhere Polybutylenglykole mit einem Molekulargewicht bis 300, 4,4' Dihydroxy-diphenylpropan, Di-hydroxymethyl-hydrochinon, Diäthanolamin, N-Methyldiäthanolamin, Triäthanolamin und Formite.

Das Verhältnis von NCO- zu OH-Gruppen sollte bei der Herstellung des Prepolymeren 2 nicht überschreiten, da einerseits der Gehalt an freiem, physiologisch bedenklichem aromatischem Diisocyanat mit dem NCO/OH-Äquivalentverhältnis ansteigt und andererseits das mit sinkendem NCO/OH-Verhältnis steigende mittlere Molgewicht des Prepolymers einer schnellen Trocknung zugute kommt. Allerdings sollte das Verhältnis auch möglichst nicht unter 1,3 : 1 fallen, da dann die erhebliche Molekülgröße zu schlechtem Verlauf und Glanzverlust führt. Der bevorzugte Bereich des NCO/OH-Äquivalentverhältnisses liegt zwischen 1,6 : 1 und 1,8 : 1. Der NCO-Gehalt der Prepolymeren beträgt in der Regel 1 bis 10 Gew-%, vorzugsweise 2 bis 8 Gew.-%.

Ein besonderer Vorteil der erfindungsgemäßen Einkomponentenlacke besteht darin, daß sie aus hochkonzentrierten Lösungen angewendet werden können. Wegen des relativ niedrigen Molgewichts der Isocyanatprepolymeren sind Lösungen zu erhalten, die bei einer Konzentration von 70 Gew.-% nur Viskositäten von etwa 5 000 bis 10 000 m Pas/25 °C aufweisen.

Selbstverständlich sind der Verdünnung der erfindungsgemäßen Lacke keine Grenzen gesetzt, andererseits sind bei geeigneter Wahl der Rohmaterialien Konzentrationen bis zu 85 % erreichbar. Abgesehen von den offensichtlichen Einsparungen beim Transport ist es aus ökologischen Gründen bevorzugt, die Lösungsmittelmenge so klein wie möglich zu halten. Grundsätzlich sind als Verdünnungsmittel alle Lösungsmittel geeignet, die gegenüber Isocyanatgruppen nicht reaktiv sind, z.B. die an sich bekannten aromatischen Kohlenwasserstoffe, Ketone und Ester, aber auch hochpolare Lösungsmittel wie Dimethylformamid oder N-Methylpyrrolidon, obwohl letztere weniger bevorzugt sind. Vorteilhaft können Gemische von verschieden hoch siedenden Lösungsmitteln verwendet werden, um eine schnelle Trocknung der Lacke bei gutem Verlauf zu erzielen.

Die erfindungsgemäßen Einkomponentenlacke können nach Belieben mit Zusätzen versehen werden, also z.B. mit an sich bekannten Katalysatoren zwecks Beschleunigung der Trocknung, mit den bekannten Mitteln zur Verbesserung des Verlaufs, z.B. Siliconölen oder Polysiloxane enthaltenden Isocyanatprepolymeren, oder auch mit Farbstoffen oder Pigmenten zur Erzielung besonderer dekorativer Effekte usw.

Die erfindungsgemäßen Einkomponentenlacke können durch Rakeln, Spritzen und Gießen aufgebracht werden. Bevorzugt werden solche Mengen angewendet, daß nach dem Trocknen ein 200 bis 500/µm dicker Film entsteht. Selbstverständlich können aber auch geringere Mengen aufgetragen werden, so daß unter einem hochglänzenden Finish die Substratstruktur noch gut zu erkennen ist.

Nach höchstens 8 Stunden ist die Lackschicht so trocken, daß die lackierten Artikel gestapelt werden können. Das Erreichen der endgültigen Festigkeit kann jedoch etliche Tage dauern (getrocknet wird bei Temperaturen von 20-120 °C, bevorzugt jedoch bei Raumtemperatur).

Dann besitzt die Lackschicht vorzüglichen Glanz und gute Fülle, ausgezeichnete Knickbeständigkeit und verklebt nicht auf wärmeverformenden Maschinen.

Ein besonderer Vorteil der erfindungsgemäßen Lacke liegt darin, daß auch einmal angebrochene Gebinde, wenn man sie gut verschließt, fast unbegrenzt lagerstabil sind und auch nach längerer Zeit dieselbe Viskosität und Trocknungsgeschwindigkeit besitzen. Mit anderen Worten : Der Verarbeiter ist nicht mehr gezwungen, eine zur Beschichtung zubereitete Menge Lack zur Gänze aufzubrauchen oder gegebenenfalls einen Rest als Verlust zu betrachten.

Obwohl die erfindungsgemäßen Einkomponentenlacke sich wegen ihres Eigenschaftsbildes vornehmlich für die Beschichtung von Leder eignen, bedeutet dies selbstverständlich nicht, daß nicht auch andere Substrate mit ihnen beschichtet oder lackiert werden können. Wegen ihrer guten Elastizität sind sie besonders für flexible Substrate geeignet. Dazu gehören beschichtete flexible Flächengebilde, wie z.B. PUR-Kunstleder auf die die erfindungsgemäßen Lacke als Finish aufgebracht werden können, ferner lassen sich Papier und Karton damit hochglanzbeschichten und schließlich können auch flexible Kunststoffe, welche geschäumt oder kompakt sein können, mit ihnen lackiert werden.

Die folgenden Beispiele dienen zur Erläuterung der Erfindung. Wenn nicht anders vermerkt, sind Mengenangaben als Gewichtsteile bzw. Gewichtsprozente zu verstehen.

## Beispiel 1

685 Teile eines Polyesters aus Adipinsäure, Diäthylenglykol und Trimethylolpropan (OH-Zahl 60), 55 Teile eines Polypropylenglykoläthers, der auf 2,2-Bis(4-hydroxyphenyl)-propan gestartet ist (OH-Zahl 200), 9 Teile eines Polypropylenglykoläthers, gestartet auf Triäthanolamin, mit der OH-Zahl 95, 40 Teile Trimethylolpropan und 18 Teile Butandiol-1,3 werden zusammen auf 100 °C erhitzt, und bei dieser Temperatur unter einem Vakuum von etwa 16 Torr eine halbe Stunde lang entwässert.

Nach dem Abkühlen auf ca. 70 °C werden 326 Teile 2,4-Diisocyanatotoluol zugegeben und das Reaktionsgemisch solange gerührt, bis der NCO-Gehalt 5,5 % beträgt. Danach wird mit einem Gemisch aus 81 Teilen Xylol und 405 Teilen Glykolmonoäthylätheracetat verdünnt. Nach dem Abkühlen auf Raumtemperatur werden 76 Teile einer Isocyanatgruppen enthaltenden Verbindung aus 11 % Bishydroxymethyldimethylpolysiloxan (OH-Zahl : 200), 56 % eines Addukts aus 3 Mol 2,4-Diisocyanatotoluol und 1 Mol Trimethylolpropan sowie 33 % Glykolmonoäthylätheracetat zugesetzt und verrührt. Das fertige Produkt besitzt eine Konzentration von 70 %, einen NCO-Gehalt von 3,4 % und eine Viskosität von etwa 5 000 mPas/20 °C.

Mit Hilfe einer airless-Spritzpistole wird auf ein mit einem handelsüblichen Acrylatbinder schwarz grundiertes Leder aus dem oben beschriebenen Lack ein naß etwa 200 µm starker Film aufgetragen. Nach dem Trocknen über Nacht bei Raumtemperatur erhält man einen trockenen, hochglänzenden Lackfilm, der 50 000 Knickungen im Bally-Flexometer unbeschädigt übersteht und dessen Oberfläche nach 2 Wochen unverändert glänzend und klar ist.

## Beispiel 2

1 000 Teile eines Polyesters aus Adipinsäure, Äthylenglykol und 1,4-Butandiol (OH-Zahl 56), 250 Teile des in Beispiel 1 beschriebenen Polyäthers der OH-Zahl 200 sowie 59 Teile des in Beispiel 1 beschriebenen Polyäthers der OH-Zahl 95 werden zusammen auf 100 °C erhitzt und bei dieser Temperatur unter einem Vakuum von etwa 21,3 m bar eine halbe Stunde lang entwässert. Nach dem Abkühlen auf etwa 60 °C werden 375 Teile eines Gemisches aus 2,4'-Diisocyanatodiphenylmethan und 4,4'-Diisocyanatodiphenylmethan im Verhältnis von 60 : 40 zugesetzt und solange verrührt, bis nach portionsweiser Zugabe von 577 Teilen Äthylacetat ein NCO-Gehalt von 1,9 % erreicht ist.

Danach werden 1 707 Teile eines Addukts aus N,N',N''-Tris(3-isocyanato-4-methylphenyl)-triazintrion und Laurylalkohol im Verhältnis 100 : 9, 50 %ig gelöst in Äthylacetat, zugegeben.

Das fertige Produkt besitzt eine Konzentration von 65 %, einen NCO-Gehalt von 3,6 % und eine Viskosität von etwa 4 000 mPas. Mit Hilfe eines reverse-roll-coaters wird auf ein bedrucktes Stück Karton ein naß etwa 20 µm starker Film aufgetragen, der etwa 1,5 Minuten bei etwa 80 °C getrocknet wird. Danach ist auf dem Karton ein trockener, hochglänzender Film entstanden, der hohe Abriebfestigkeit und

Knickbeständigkeit aufweist.

**Ansprüche :**

1. Feuchtigkeitshärtende Einkomponentenlacke auf Basis eines freie Isocyanatgruppen aufweisenden Umsetzungsprodukts aus einem höhermolekularen Polyol mit einer mittleren Hydroxylfunktionalität von 2 bis 3, Polyisocyanaten und gegebenenfalls niedermolekularen Polyhydroxylverbindungen, dadurch gekennzeichnet, daß das höhermolekulare Polyol eine Mischung ist aus

a) einem Hydroxylpolyester mit einem mittleren Molekulargewicht von 500 bis 6 000

b) einem Hydroxylpolyäther der allgemeinen Formel

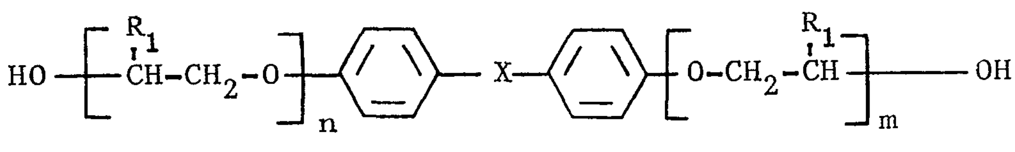

in der

$R^1$ für Wasserstoff, einen Alkylrest mit 1-4 Kohlenstoffatomen oder einen Phenylrest,

X für einen der zweiwertigen Reste -S-, -O-, $-SO_2-$, -CO- oder

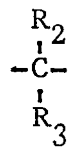

wobei

$R_2$ und $R_3$ gleich oder verschieden sind und Wasserstoff oder einen $C_1$-$C_4$-Alkylrest darstellen, und n und m für eine ganze Zahl > 0 stehen, wobei (n + m) so gewählt wird, daß das mittlere Molekulargewicht des Hydroxypolyäthers 300 bis 1 200 beträgt,

sowie gegebenenfalls

c) einem weiteren Polyätherpolyol mit einem Molekulargewicht von 500 bis 6 000,

wobei der Anteil von b) an der Gesamtmenge des höhermolekularen Polyols 3 bis 30 Gew.-% und jener von c) 0 bis 5 Gew.-% beträgt.

2. Lack nach Anspruch 1, dadurch gekennzeichnet, daß der Anteil von b) an der Gesamtmenge des höhermolekularen Polyols 4 bis 20 Gew.-% beträgt.

3. Lack nach Anspruch 1 oder 2, dadurch gekennzeichnet, daß der Anteil von c) an der Gesamtmenge des höhermolekularen Polyols 0,5 bis 3 Gew.-% beträgt.

4. Lack nach Anspruch 1 bis 3, dadurch gekennzeichnet, daß c) ein mindestens ein tertiäres Stickstoffatom enthaltendes Polyätherspolyol ist.

5. Lack nach Anspruch 1 bis 4, dadurch gekennzeichnet, daß der Hydroxypolyäther b) ein auf Bisphenol A gestarteter Polyäther ist.

6. Lack nach Anspruch 1 bis 5, dadurch gekennzeichnet, daß der Hydroxylpolyäther b) ein Polypropylenoxidpolyäther ist.

7. Lack nach Anspruch 1 bis 6, dadurch gekennzeichnet, daß a) ein Adipinsäurepolyester ist.

8. Lack nach Anspruch 1 bis 7, dadurch gekennzeichnet, daß a) ein Polyester mit einer mittleren Hydroxylfunktionalität von 2 bis 3 ist.

9. Lack nach Anspruch 1 bis 8, dadurch gekennzeichent, daß der NCO-Gehalt des Umsetzungsprodukts zwischen 1 und 10 Gew.-% liegt.

10. Verfahren zur narbendeckenden und hochglänzenden Beschichtung von Leder durch Applikation eines feuchtigkeitshärtenden Lacks aus einem in gegenüber Isocyanaten inerten Lösungsmitteln gelösten Isocyanatgruppen aufweisenden Prepolymeren, dadurch gekennzeichnet, daß ein Lack gemäß Anspruch 1 bis 9 eingesetzt wird.

**Claims**

1. Moisture-hardening one-component lacquers based on a reaction product containing free isocyanate groups of a relatively high molecular weight polyol having an average hydroxyl functionality of from 2 to 3, polyisocyanates and, optionally, low molecular weight polyhydroxyl compounds, characterised in that the relatively high molecular weight polyol is a mixture of :

a) a hydroxyl polyester having an average molecular weight of from 500 to 6 000,

b) a hydroxyl polyether of the general formula

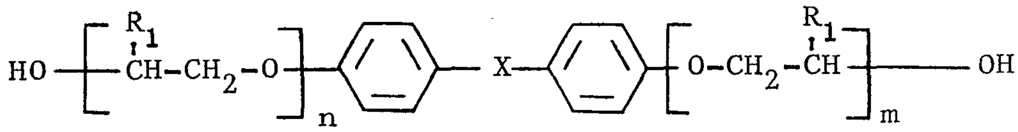

in which

$R^1$ represents hydrogen, an alkyl radical with 1-4 carbon atoms or a phenyl radical,

X represents one of the difunctional radicals -S-, -O-, $SO_2$-, -CO- or

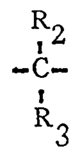

wherein

$R_2$ and $R_3$ are the same or different and represent hydrogen or a $C_1$-$C_4$ alkyl radical, and

n and m represent an integer of $> 0$, (n + m) being selected in such a way that the hydroxyl polyether has an average molecular weight of from 300 to 1 200.

and, optionally,

c) another polyether polyol having a molecular weight of from 500 to 6 000,

component b) making up from 3 to 30 % by weight and component c) from 0 to 5 % by weight of the total quantity of the relatively high molecular weight polyol.

2. A lacquer according to Claim 1, characterised in that component b) makes up from 4 to 20 % by weight of the total quantity of the relatively high molecular weight polyol.

3. A lacquer according to Claim 1 or 2, characterised in that component c) makes up from 0.5 to 3 % by weight of the total quantity of the relatively high molecular weight polyol.

4. A lacquer according to Claims 1 to 3, characterised in that c) is a polyether polyol containing at least one tertiary nitrogen atom.

5. A lacquer according to Claims 1 to 4, characterised in that the hydroxyl polyether b) is a polyether started with bisphenol A.

6. A lacquer as claimed in Claims 1 to 5, characterised in that the hydroxyl polyether b) is a polypropylene oxide polyether.

7. A lacquer according to Claims 1 to 6, characterised in that a) is an adipic acid polyester.

8. A lacquer according to Claims 1 to 7, characterised in that a) is a polyester having an average hydroxyl functionality of from 2 to 3.

9. A lacquer according to Claims 1 to 8, characterised in that the reaction product has an NCO content between 1 and 10 % by weight.

10. A process for the grain-masking and high-gloss coating of leather by applying a moisture-hardening lacquer, comprising a pre-polymer containing isocyanate groups dissolved in solvents inert to isocyanates, characterised in that a lacquer according to Claims 1 to 9 is used.

**Revendications**

1. Vernis à un composant durcissant à l'humidité et à base d'un produit réactionnel comportant des groupes isocyanates libres, ce produit réactionnel étant formé à partir d'un polyol de poids moléculaire élevé ayant une fonctionnalité hydroxy moyenne de 2 à 3, de polyisocyanates et éventuellement de composés polyhydroxy de faible poids moléculaire, caractérisés en ce que le polyol de poids moléculaire élevé est un mélange comprenant :

a) un hydroxypolyester d'un poids moléculaire moyen de 500 à 6 000,

b) un hydroxypolyéther de formule générale :

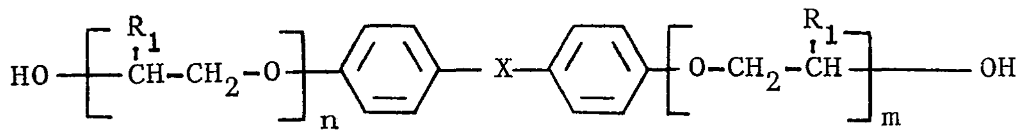

dans laquelle

$R_1$ représente un atome d'hydrogène, un groupe alkyle contenant 1 à 4 atomes de carbone ou un groupe phényle,

X représente un des radicaux bivalents suivants : -S-, -O-, $-SO_2-$, -CO- ou

$$-\overset{\displaystyle R_2}{\underset{\displaystyle R_3}{C}}-$$

$R_2$ et $R_3$ étant identiques ou différents et représentant chacun un atome d'hydrogène ou un groupe alkyle contenant 1 à 4 atomes de carbone, et

n et m représentent chacun un nombre entier supérieur à 0,(n + m)étant choisi de telle sorte que le poids moléculaire moyen de l'hydroxypolyéther soit de 300 à 1 200.

ainsi qu'éventuellement

c) un autre polyéther-polyol d'un poids moléculaire de 500 à 6 000,

la fraction de b) dans la quantité totale du polyol de poids moléculaire élevé étant de 3 à 30 % en poids et celle de c) étant de 0 à 5 % en poids.

2. Vernis suivant la revendication 1, caractérisé en ce que la fraction de b) dans la quantité totale du polyol de poids moléculaire élevé est de 4 à 20 % en poids.

3. Vernis suivant la revendication 1 ou 2, caractérisé en ce que la fraction de c) dans la quantité totale du polyol de poids moléculaire élevé est de 0,5 à 3 % en poids.

4. Vernis suivant les revendications 1 à 3, caractérisé en ce que c) est un polyéther-polyol contenant au moins un atome d'azote tertiaire.

5. Vernis suivant les revendications 1 à 4, caractérisé en ce que l'hydroxy-polyéther b) est un polyéther formé à partir de bisphénol A.

6. Vernis suivant les revendications 1 à 5, caractérisé en ce que l'hydroxypolyéther b) est un polyéther d'oxyde de polypropylène.

7. Vernis suivant les revendications 1 à 6, caractérisé en ce que a) est un polyester d'acide adipique.

8. Vernis suivant les revendications 1 à 7, caractérisé en ce que a) est un polyester ayant une fonctionnalité hydroxy moyenne de 2 à 3.

9. Vernis suivant les revendications 1 à 8, caractérisé en ce que la teneur en groupes NCO du produit réactionnel se situe entre 1 et 10 % en poids.

10. Procédé en vue de former, sur le cuir, un enduit d'un haut brillant et recouvrant le grain par application d'un vernis durcissant à l'humidité et constitué d'un prépolymère comportant des groupes isocyanate en solution dans des solvants inertes vis-à-vis des isocyanates, caractérisé en ce qu'on utilise un vernis suivant les revendications 1 à 9.